# EUROPÄISCHE PATENTSCHRIFT

(11) **EP 2 090 504 B1**
(45) Veröffentlichungstag und Bekanntmachung des Hinweises auf die Patenterteilung: **01.05.2013**
(21) Anmeldenummer: 09152553.5
(22) Anmeldetag: 11.02.2009
(51) Int. Cl.: B62K 21/00, B62K 21/06

(54) **Fahrradrahmen**
Bicycle frame
Cadre de bicyclette

(30) Priorität: 15.02.2008 DE 102008009603
(43) Veröffentlichungstag der Anmeldung: 19.08.2009
(73) Patentinhaber: Muff, André Armando, 8006 Zürich (CH)
(72) Erfinder: Muff, André Armando, 8006 Zürich (CH)
(74) Vertreter: Kohlmann, Kai

(56) Entgegenhaltungen:
- EP-A2- 0 800 986
- EP-A2- 0 894 701
- DE-A1- 2 352 321
- DE-A1- 4 137 203
- JP-A- 3 235 775
- US-A- 5 938 225
- US-A1- 2003 047 930

## Beschreibung

Die Erfindung betrifft einen Rahmen nach dem Oberbegriff des Anspruchs 1.

Der Fahrradrahmen bildet das Grundgerüst eines Fahrrads und trägt das Gewicht des Fahrers und überträgt dies auf die Laufräder. Außerdem trägt der Fahrradrahmen alle Komponenten und Anbauteile. Durch die Bauart und Ausführung des Fahrradrahmens werden wesentlich die Fahreigenschaften des Fahrrades bestimmt. Der bereits 1885 entwickelte Diamantrahmen ist die am häufigsten vorkommende Rahmenform bei Fahrrädern. Er besteht im Wesentlichen aus einem Dreieck, gebildet durch die Sattelstreben, die Kettenstreben und das Sattelrohr sowie einem Trapez, dass durch das Oberrohr, das Sattelrohr, das Unterrohr und das Steuerrohr gebildet wird. Die optimale Größe des Rahmens ist unter anderem von der Körpergröße des Fahrers abhängig. Dabei wird die Rahmengröße durch die Rahmenhöhe und die Rahmenlänge bestimmt. Die Rahmenhöhe wird zumeist von der Mitte des Tretlagers bis zur Oberkante der Sattelmuffe gemessen. Die Rahmenlänge wird zumeist von der Mitte des Sattelrohrs bis zur Mitte des Steuerrohrs horizontal gemessen. Insoweit müssen die Hersteller von Fahrradrahmen für unterschiedlich große Fahrer eine Vielzahl von Rahmengrößen herstellen und bereithalten. Die Feineinstellung der Höhe wird durch Verstellung der Sattelstütze bewerkstelligt. Hierdurch ändert sich der Abstand zwischen der Mitte des Tretlagers und der Oberkante des Sattels. Eine Feineinstellung des Abstandes zwischen der Sattelspitze und der Mitte des Lenkers im Vorbau kann durch dessen Austausch erreicht werden.

Die vorliegende Erfindung bezieht sich auf sämtliche Rahmenformen, die ein Steuerrohr aufweisen, insbesondere auf Diamantrahmen und deren Abwandlungen sowie Trapezrahmen oder Y-Rahmen.

Die DE 23 52 321 A1 offenbart einen Mechanismus zum Einstellen des Neigungswinkels des Steuerkopfs der Vorderradgabel eines Motorrads. Um den Neigungswinkel genau und zuverlässig einstellen zu können, wird in jedes Ende des Steuerkopfrohrs ein exzentrischer Lageraußenring eingesetzt, dessen exzentrischer Sitz ein Lager für den Lenkschaft aufnimmt. Der Winkel des Lenkschafts wird dadurch verändert, dass der Steuerkopf auseinandergebaut, die Lageraußenringe herausgenommen und um ihre Längsachse um 180 Grad gedreht wieder eingesetzt werden. Um die gewünschte Schrägstellung des Lenkschafts zu ermöglichen, weist der Lagersitz entweder eine kugelabschnittsförmige gekrümmte Außenfläche auf oder die Achse des exzentrischen Sitzes verläuft winklig zur Achse des Steuerkopfrohres.

Die EP 0 894 701 A21, auf die der Oberbegriff von Anspruch 1 basiert, offenbart eine konisch geformte Verriegelungseinrichtung für einen Einsatz zur Halterung eines Lagers einer Lenkeinheit für Motorräder. Der Gabelschaft der Lenkeinheit ist in einem zylindrischen Steuerrohr der Lenkeinheit eingesetzt. Die Lenkachse des Gabelschaftes ist exzentrisch zu der Längsachse des Steuerrohres. Um die räumliche Lage der Lenkachse zu der Achse des Steuerrohrs zu verändern wird mit Hilfe eines Werkzeugs, das in die obere Fläche des Einsatzes eingreift, der Einsatz in dem Steuerrohr gedreht. Zum Verdrehen des Einsatzes muss zunächst die konisch geformte Verriegelungseinrichtung, die mit dem oberen Endteil des Steuerrohrs und einem zugeordneten Endteil des Einsatzes zusammenwirkt, gelockert werden. Nach dem Verdrehen wird die konisch geformte Verriegelungseinrichtung in Form eines Verschlussrings axial geschraubt, um den Einsatz in dem Steuerrohr radial zu verspannen. Hierdurch soll die Verriegelungsbeanspruchung des Einsatzes in dem Steuerrohr gleichmäßig verteilt und dadurch eine plastische Verformung des Steuerrohrs oder des Gabelschaftes vermieden werden.

Ausgehend von diesem Stand der Technik liegt der Erfindung die Aufgabe zu Grunde, einen Fahrradrahmen zu schaffen, der sich einfach und preisgünstig an unterschiedlich große Fahrer anpassen lässt und der eine Änderung der Fahreigenschaften eines mit diesem Rahmen ausgestatteten Fahrrades mit einfachen Mitteln erlaubt.

Diese Aufgabe wird durch einen Fahrradrahmen mit den Merkmalen des Anspruchs 1 gelöst.

Die formschlüssige Fixierung der austauschbaren bzw. um 180 Grad drehbaren Einsätze in dem Steuerrohr kommt durch die Form des Einsatzes zu Stande, die mit dem Innenquerschnitt des Steuerrohres übereinstimmt, wobei die Einsätze als Scheiben ausgestaltet sind und die Kontur der Einsätze die Form eines Ovals, insbesondere die Form einer Ellipse, aufweist. Die scheibenförmigen Einsätze können auch die Form einer Superellipse aufweisen. Unter der Superellipse wird im Sinne der Erfindung eine geometrische Figur verstanden, die ein Mittelding zwischen einer Ellipse und einem Rechteck darstellt.

Die Drehachse des Gabelschaftes wird durch Drehen der Einsätze bzw. deren Austausch stets in Rahmenlängsrichtung parallel verschoben. Die lösbaren in die obere und untere Stirnseite des Steuerrohrs eingreifenden Einsätze erlauben eine rasche Lageänderung der durch das obere und untere Steuersatzlager definierten Drehachse des Gabelschaftes. In dem die Aufnahme für das obere bzw. untere Steuersatzlager in dem Einsatz in Rahmenlängsrichtung weiter vorne bzw. hinten liegt, lässt sich der Abstand der Gabel und damit der Radnabenaufnahme zum Tretlagergehäuse rasch verändern. Hierdurch werden nicht nur die Sitzposition des Fahrers, sondern insbesondere auch die Fahreigenschaften des den Rahmen aufweisenden Fahrrades verändert.

Die achsensymmetrischen ovalen Einsätze, können durch Herausnehmen und Drehung um 180 Grad um die Symmetrieachse die Aufnahmen für das obere Steuersatzlager und für das untere Steuersatzlager in Längsrichtung des Fahrradrahmens verlagern, weil die Aufnahmen exzentrisch zur Rotationsachse des oberen und unteren Einsatzes angeordnet sind. In Folge der Drehung kommt es zu einer Verlagerung der Drehachse des Gabelschaftes und damit zu der erwünschten Veränderung der Rahmengeometrie. Durch einfaches Drehen der Einsätze lassen sich damit bereits zwei Abstände zwischen Radnabenaufnahme und Tretlagergehäuse einstellen. Ein größerer Abstand zwischen Radaufnahme und Tretlager trägt bei der Benutzung des Fahrrades durch einen größeren Fahrer maßgeblich zur Erhöhung der Sicherheit bei, weil die Gefahr von Kollisionen der Fußspitze mit dem Vorderrad beim Einlenken und damit die Sturzgefahr reduziert werden.

Der größte Durchmesser der Aufnahme ist in einem solchem Maß kleiner als die Längserstreckung des Einsatzes in Rahmenlängsrichtung, so dass sich die Aufnahme in dem Einsatz in Rahmenlängsrichtung weiter vorne bzw. hinten platzieren lässt. Um dies zu erreichen, weist der Rand zu beiden Seiten der Aufnahme in Rahmenlängsrichtung eine Gesamterstreckung auf, die mindestens 20 %, vorzugsweise jedoch mindestens 30 % - 50 % des größten Durchmessers der Aufnahme beträgt.

Eine enger gestufte Einstellung der Abstände zwischen Tretlagergehäuse und Radnabenaufnahme lässt sich erreichen, wenn passend zu dem Fahrradrahmen mehrere Einsatz-Paare bestehend aus jeweils einem unteren und einem oberen Einsatz hergestellt werden, wobei die Aufnahmen für die Steuersatzlager in jedem Paar an einer anderen Position angeordnet sind. Die Aufnahmen werden beispielsweise in 5 mm Schritten in Rahmenlängsrichtung versetzt angeordnet. In diesem Fall ist eine Achsensymmetrie der vorzugsweise als Scheibe ausgestalteten Einsätze nicht zwingend erforderlich. Die Kontur der Scheiben kann in diesem Fall beispielsweise die Form eines beliebigen Ovals aufweisen. Entscheidend ist allerdings auch bei dieser Ausführungsform, dass die obere Aufnahme für das obere Steuersatzlager und die untere Aufnahme für das untere Steuersatzlager in Bezug auf die im Steuerrohr eingebauten oberen und unteren Einsätze stets übereinstimmend angeordnet sind; bei den in der Form übereinstimmenden Einsätzen ist damit in dem zylindrischen Steuerrohr gewährleistet, dass durch paarweisen Austausch der Einsätze die Steuerachse in dem Steuerrohr parallel verschoben wird.

Der gattungsgemäße Fahrradrahmen gemäß der Erfindung ist bei einer Ausführung mit mehreren Einsatz-Paaren passend zu dem Fahrradrahmen, dadurch gekennzeichnet, dass
- an der in einer Gebrauchsstellung des Fahrradrahmens oberen und unteren Stirnseite des Steuerrohrs lösbar jeweils einer der beiden in das Steuerrohr formschlüssig eingreifenden Einsätze des Einsatz-Paares angeordnet ist,
- wobei sowohl der obere als auch der untere Einsatz des Einsatz-Paares eine Aufnahme für das obere bzw. untere Steuersatzlager des Steuersatzes aufweist und
- wobei die obere Aufnahme für das obere Steuersatzlager und die untere Aufnahme für das untere Steuersatzlager in Bezug auf die im Steuerrohr eingebauten oberen und unteren Einsätze stets übereinstimmend angeordnet sind.

Als Widerlager für die auf den Steuersatz wirkende Vorspannkraft ist im Steuerrohr im Abstand von dessen stirnseitiger oberer Öffnung ein oberer Stützflansch für den in das Steuerrohr eingreifenden Einsatz und im Abstand von dessen stirnseitiger unterer Öffnung ein unterer Stützflansch für den in das Steuerrohr eingreifenden Einsatz angeordnet. Der Abstand zwischen stirnseitiger Öffnung und Stützflansch entspricht zumindest der Dicke der oberen bzw. unteren Scheibe, so dass die als Einsatz dienenden Scheiben vorzugsweise bündig mit den stirnseitigen Öffnungen des Steuerrohrs abschließen. Sofern der Abstand etwas größer ist als die Dicke der Scheibe liegt diese etwas versenkt im Steuerrohr, so dass aus ästhetischen Gründen eine Abdeckplatte oberhalb des Einsatzes angebracht werden kann. Schließlich kann der Abstand zumindest an der Oberseite des Steuerrohrs etwas geringer als die Dicke der Scheibe sein, die dann geringfügig über das Steuerrohr hinausragt.

Alternativ können die Einsätze an ihrer in Einbaulage in Richtung der stirnseitigen Öffnung des Steuerrohrs weisenden Seite einen den Einsatz umgebenden Flansch oder mindestens einen an dem Rand jedes Einsatzes angeordneten Vorsprung aufweisen, der sich auf dem Öffnungsrand des Steuerrohrs abstützt. Der Flansch oder Vorsprung schließt vorzugsweise bündig mit der Oberfläche des Einsatzes ab.

Der Steuersatz umfasst zwei Steuersatzlager. Jedes Steuersatzlager weist einen Innen- und Außenring sowie dazwischen die Wälzkörper auf. Darüber hinaus gibt es so genannte integrierte Steuersätze, bei denen ein gekapseltes Lager von einer Lagerschale aufgenommen wird. Diese Lagerschalen bilden die Lauffläche für die Wälzkörper des gekapselten Lagers. Beide Steuersatzlagervarianten werden nachfolgend einheitlich als Steuersatzlager bezeichnet.

Die obere Aufnahme für das zugehörige Steuersatzlager und die untere Aufnahme für das zugehörige Steuersatzlager sind vorzugsweise als Kegelsitz ausgebildet. Zu diesem Zweck werden die konisch zulaufenden Anlageflächen für das Steuersatzlager in dem Einsatz mit vorzugsweise 36 Grad oder 45 Grad eingearbeitet. Das Steuersatzlager kann ohne spezielles Werkzeug und ohne Einpressen in die Aufnahme des Einsatzes eingebaut werden.

Sofern der Steuersatz die oben erwähnten Lagerschalen umfasst, können die Aufnahmen als zylindrische Klemmsitze für die Lagerschalen ausgebildet sein. Auch preiswertere Steuersatzlager, z. B. Axial-/Schrägkugellager, werden vorzugsweise in hohlzylindrische Aufnahmen in den Einsätzen eingepresst.

Sowohl die als zylindrischer Klemmsitz als auch die als Konussitz ausgebildete Aufnahme sind als Durchgang durch den Einsatz ausgestaltet, dessen kleinster Durchmesser mindestens dem Außendurchmesser des aufzunehmenden Gabelschaftes entspricht.

Wenn der an der oberen Stirnseite des Steuerrohrs angeordnete Einsatz und der an der unteren Stirnseite des Steuerrohrs angeordnete Einsatz durch einen vorzugsweise kreiszylindrischen Hohlzylinder miteinander verbunden sind, durch dessen Höhlung der Gabelschaft hindurchführbar ist, nimmt dieser Hohlzylinder die auf den Steuersatz wirkende Vorspannkraft auf. Stützflansche oder Vorsprünge an den Einsätzen sind bei einer solchen Ausführung grundsätzlich entbehrlich. Der Hohlzylinder kann gegenüber den Einsätzen einen kleineren Querschnitt aufweisen, so dass dessen Außenwand keinen Kontakt zum Steuerrohr hat. Denkbar ist jedoch auch ein Hohlzylinder mit einem der Innenkontur des Steuerrohrs entsprechenden Querschnitt.

Außerdem ist der Einbau beider Einsätze von einer der Stirnseiten des Steuerrohrs möglich, in dem die Einheit aus zwei Einsätzen und Hohlzylinder in das Steuerrohr hinein geschoben wird. Die Länge des Hohlzylinders ist auf die Länge des Steuerrohrs abgestimmt, so dass die stirnseitigen Öffnungen der Aufnahmen für die Steuersatzlager mit den Öffnungen des Steuerrohrs in etwa bündig abschließen.

Konstruktionstechnisch vorteilhaft sind die beiden Einsätze und der Hohlzylinder einstückig ausgebildet, beispielsweise als Spritzgießteil. Unabhängig von der Form der Einsätze erstrecken sich die Aufnahme für das obere Steuersatzlager und die Aufnahme für das untere Steuersatzlager jeweils bis zu dem Hohlzylinder, um einen ungehinderten Durchgang für den Gabelschaft zu schaffen.

Nachfolgend wird die Erfindung anhand der Figuren näher erläutert. Es zeigen
- **Figur 1**: eine perspektivische Ansicht eines erfindungsgemäßen Fahrradrahmens,
- **Figur 2**: eine vergrößerte Darstellung des Steuerrohrs des Fahrradrahmens nach Figur 1,
- **Figur 3a**: eine Seitenansicht des Steuerrohrs nach Figur 2 mit herausgenommenen Wende-Einsätzen,
- **Figur 3b**: eine schematische Aufsicht auf das Steuerrohr nach Figur 3a,
- **Figur 4**: eine geschnittene Darstellung des Steuerrohrs mit eingebauten Einsätzen,
- **Figur 5**: eine Darstellung mehrerer Aufsichten auf das Steuerrohr mit unterschiedlichen Einsätzen sowie
- **Figur 6**: eine geschnittene Darstellung des Steuerrohrs mit einem oberen und einem unteren Einsatz, die durch ein Hohlprofil miteinander zu einer Einheit verbunden sind.

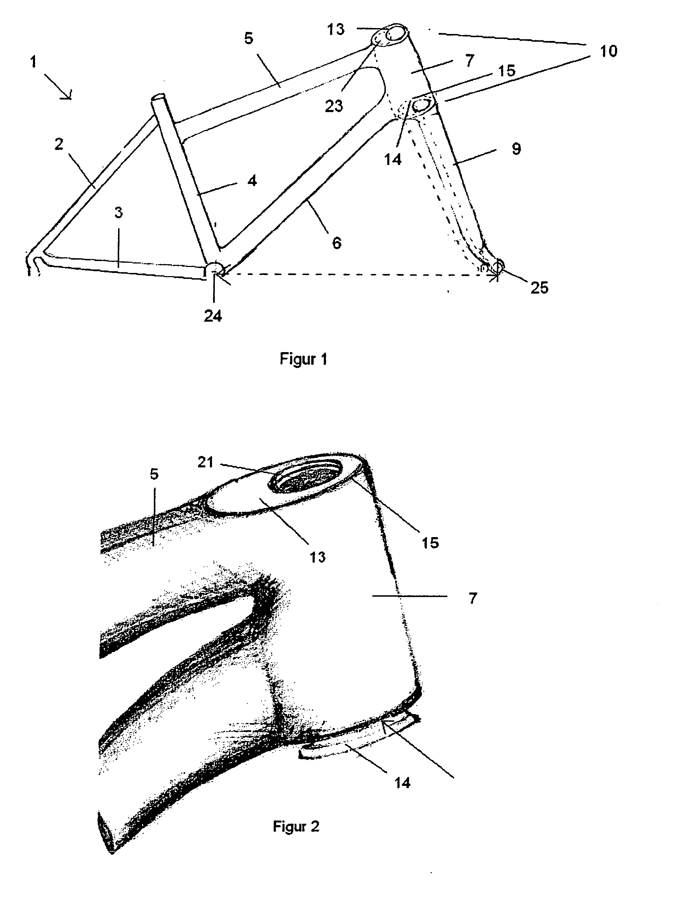

Figur 1 zeigt einen als Diamantrahmen ausgeführten Fahrradrahmen (1), der aus einem Dreieck gebildet durch eine Sattelstrebe (2), eine Kettenstrebe (3) und ein Sattelrohr (4) sowie einem Trapez besteht, das durch ein Oberrohr (5), das Sattelrohr (4), ein Unterrohr (6) sowie ein Steuerrohr (7) gebildet wird.

Das Steuerrohr (7) bildet das Lagergehäuse für den Steuersatz (10) zur drehbaren Lagerung eines Gabelschaftes (8) einer Gabel (9) zur Führung des nicht dargestellten Vorderrades eines Fahrrades.

Der Steuersatz (10) umfasst zwei den Gabelschaft (8) führende Wälzlager, die bei Fahrrädern als Steuersatzlager (11,12) bezeichnet werden. Als Steuersatzlager (11,12) kommen insbesondere Kegelrollenlager bzw. konische Nadellager sowie für einfache Lagerungen Axial-/Schrägkugellager in Betracht. Der Innenring des unteren Steuersatzlagers (12) wird auf den Gabelschaft (8) aufgepresst oder durch einen Konussitz fixiert. Der Innenring des oberen Steuersatzlagers (11) wird je nach Ausführung des Gabelschaftes (8) geschraubt bzw. bei modernen Gabeln durch einen Konussitz fixiert. Sofern der Gabelschaft (8) gewindelos ist, gehört zum Steuersatz eine eigene, in den Figuren nicht dargestellte Spannvorrichtung. Die Befestigung der Spannvorrichtung geschieht mit Hilfe einer Kralle oder eines Spreizkonus, die bzw. der in den Gabelschaft (8) eingeschlagen bzw. eingeführt wird. Am Vorbau wird eine Kappe aufgesteckt, die eine Schraube enthält mit derer der Gabelschaft nach oben gezogen wird. In Folge dessen wird eine Vorspannung auf die Steuersatzlager ausgeübt.

An der oberen Stirnseite des Steuerrohrs (7) ist ein in das Steuerrohr (7) eingreifender elliptischer Einsatz (13) angeordnet, dessen Querschnittsfläche größer als das Steuersatzlager (11) ist. An der unteren Stirnseite des Steuerrohrs (7) ist ein weiterer, formgleicher elliptischer Einsatz (14) angeordnet, dessen Querschnittsfläche ebenfalls größer als das untere Steuersatzlager (12) ist. Die elliptischen Einsätze (13, 14) greifen mit einer Spiel-, Press- oder Übergangspassung formschlüssig in den freien Innenquerschnitt (15) (vgl. die gestrichelte Linie in Figur 1) des Steuerrohrs (7) ein, der mit dem Querschnitt der beiden Einsätze (13, 14) übereinstimmt.

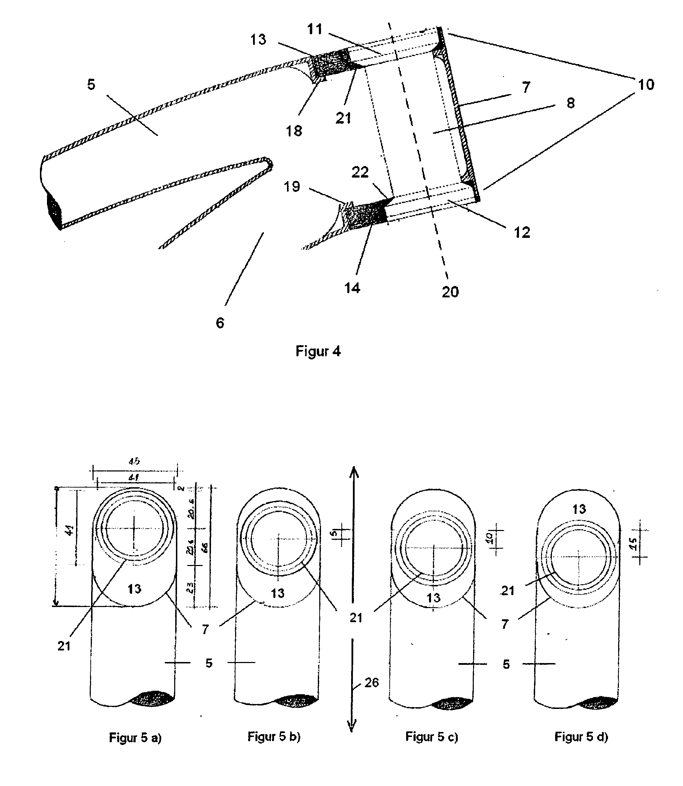

Im Steuerrohr (7) befindet sich im Abstand von dessen stirnseitiger oberer Öffnung (16) ein umlaufender in Figur 4 dargestellter oberer Stützflansch (18), für den in das Steuerrohr (7) eingreifenden Einsatz (13). Im Abstand von der unteren Öffnung (17) befindet sich ein weiterer umlaufender unterer Stützflansch (19) für den von unten in das Steuerrohr (7) eingreifenden Einsatz (14).

Die senkrecht zu der Drehachse (20) des Gabelschaftes (8) verlaufenden Stützbereiche des oberen und unteren Stützflansches (18,19) befinden sich in einem Abstand zu den jeweiligen stirnseitigen oberen bzw. unteren Öffnungen (16, 17), der in etwa der Dicke des scheibenförmigen oberen und unteren Einsatzes (13,14) entspricht. Die horizontalen Abschnitte reichen lediglich soweit in das Steuerrohr (7) hinein, dass der Gabelschaft (8) problemlos, unabhängig von dem jeweils verwendeten Einsatz (13,14) durch das Steuerrohr (7) hindurchgeführt werden kann. Sowohl der obere Einsatz (13) als auch der untere Einsatz (14) weisen jeweils einen Konussitz als Aufnahme (21) für das obere Steuersatzlager (11) bzw. als Aufnahme (22) für das untere Steuersatzlager (12) auf. Die Aufnahmen (21, 22) sind exzentrisch zu den achssymmetrischen Einsätzen (13, 14) angeordnet. Dabei stimmt die Exzentrizität der unteren und oberen Aufnahme zu der Symmetrieachse der Einsätze (13, 14) überein.

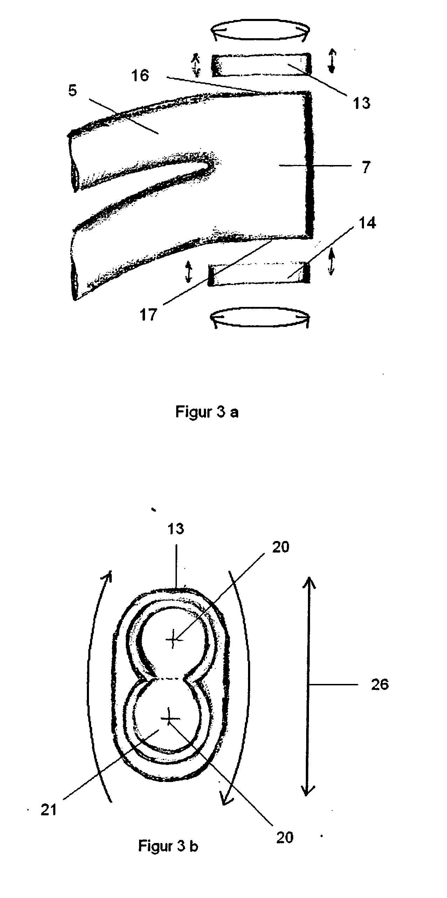

Durch Herausnehmen des unteren und oberen Einsatzes (13,14) aus dem Steuerrohr (7), wie dies insbesondere in Figur 3a veranschaulicht ist, und anschließendes Drehen der Einsätze (13,14) um 180 Grad um deren Symmetrieachse werden die obere und untere Aufnahme (21,22) für die Steuersatzlager (11, 12) in Längsrichtung des Rahmens (1) aus der in Figur 1 dargestellten vorderen Position in die in Figur 1 gestrichelt dargestellte hintere Position (23) verlagert. In Folge dessen wandert die Gabel (9) und der Gabelschaft (8) im Steuerrohr (7) in Richtung des Tretlagergehäuses (24), wodurch sich der Abstand zwischen dem Tretlagergehäuse (24) und der Radnabenaufnahme (25) an der Gabel (9) reduziert. In Folge dessen wandert auch der Vorbau, der bei heute üblichen Gabeln von außen den Gabelschaft (8) umfasst, in Richtung des Tretlagergehäuses (24). Hierdurch wird nicht nur die Position des Fahrers auf dem Fahrrad verändert, sondern auch die Fahreigenschaften des Fahrrades.

Insbesondere in der Aufsicht in Figur 3b ist erkennbar, wie durch Herausnehmen, Drehen und Wiedereinsetzen der Einsätze (13, 14) in das Steuerrohr (7) die Lage der Drehachse (20) in Rahmenlängsrichtung (26) verlagert wird.

In Figuren 5 a-d sind vier Einsätze (13) dargestellt, in denen die Aufnahmen (21) in Rahmenlängsrichtung (26) jeweils 5 mm versetzt zueinander angeordnet sind. Durch Wahl des geeigneten Einsatzes (13,14) lassen sich daher der Radstand und die Lage des Vorderbaus in 5 mm-Schritten anpassen, ohne dass weitergehende Änderungen des Fahrradrahmens erforderlich sind. Aufgrund der Achssymmetrie können auch die in Figur 5a-d dargestellten Einsätze zusätzlich jeweils um 180 Grad gedreht werden. Sollte der Innenquerschnitt (15) des Steuerrohres (7) sowie die Einsätze (13,14) keinen achsensymmetrischen Querschnitt aufweisen, erfolgt die Anpassung des Rahmens an unterschiedliche Fahrer ausschließlich durch Auswahl eines geeigneten Einsatzes (13,14), in dem die untere bzw. obere Aufnahme (21, 22) in Rahmenlängsrichtung (26) mehr oder weniger weit in Richtung des Hinterrades verschoben ist.

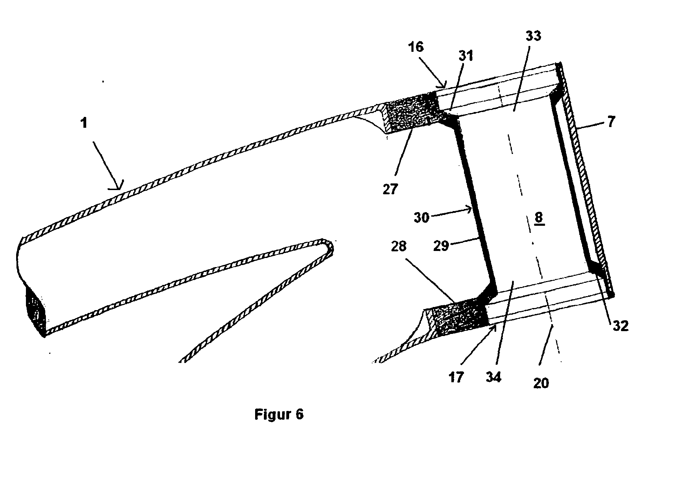

Figur 6 zeigt schließlich eine Variante des Fahrradrahmens (1) bei der ein an der oberen Stirnseite des Steuerrohrs (7) angeordneter oberer Einsatz (27) und ein an der unteren Stirnseite des Steuerrohrs (7) angeordneter unterer Einsatz (28) durch einen kreiszylindrischen Hohlzylinder (29) miteinander verbunden sind, durch dessen Höhlung der Gabelschaft (8) hindurchgeführt ist. Im dargestellten Ausführungsbeispiel sind die beiden Einsätze (27,28) und der Hohlzylinder (29) einstückig ausgebildet.

Der dargestellte Hohlzylinder (29) weist gegenüber den Einsätzen (27,28) einen kleineren Querschnitt auf, so dass dessen Außenwand (30) keinen Kontakt zum Steuerrohr (7) hat. Denkbar ist jedoch auch ein Hohlzylinder (29) mit einem der Innenkontur des Steuerrohrs entsprechenden Querschnitt, dessen Außenwand an den Innenwand des Steuerrohrs (7) anliegt. In Richtung der Drehachse (20) erstreckt sich der Hohlzylinder (29) bis an die Durchgänge (33,34) für den Gabelschaft (8) in den Aufnahmen (31,32) heran.

In dieser Ausführungsform werden die beiden miteinander verbundenen Einsätze (27,28) vorzugsweise von der oberen Stirnseite des Steuerrohrs (7) in das Steuerrohr (7) hinein geschoben. Die Länge des Hohlzylinders (29) ist auf die Länge des Steuerrohrs (7) abgestimmt, so dass die stirnseitigen Öffnungen der Aufnahmen (31,32) für die Steuersatzlager mit den Öffnungen des Steuerrohrs bündig abschließen.

Durch Herausnehmen der Einheit bestehend aus dem unteren und oberen Einsatz (27,28) und dem Hohlzylinder (29) aus dem Steuerrohr (7) und anschließendes Drehen der Einheit um 180 Grad um deren Symmetrieachse werden die obere und untere Aufnahme (31,32) für die Steuersatzlager in Längsrichtung des Rahmens (1) aus der in Figur 6 dargestellten vorderen Position in eine hintere Position, entsprechend der in Figur 1 dargestellten hinteren Position (23), verlagert.

### Bezugszeichenliste

| **Nr.** | **Bezeichnung** | **Nr.** | **Bezeichnung** |
|---|---|---|---|
| 1. | Fahrradrahmen | 27. | oberer Einsatz |
| 2. | Sattelstrebe | 28. | unterer Einsatz |
| 3. | Kettenstrebe | 29. | Hohlzylinder |
| 4. | Sattelrohr | 30. | Außenwand |
| 5. | Oberrohr | 31. | obere Aufnahme |
| 6. | Unterrohr | 32. | untere Aufnahme |
| 7. | Steuerrohr | 33. | oberer Durchgang |
| 8. | Gabelschaft | 34. | unterer Durchgang |
| 9. | Gabel | | |
| 10. | Steuersatz | | |
| 11. | Steuersatzlager | | |
| 12. | Steuersatzlager | | |
| 13. | Einsatz (oben) | | |
| 14. | Einsatz (unten) | | |
| 15. | Innenquerschnitt | | |
| 16. | obere Öffnung Steuerrohr | | |
| 17. | untere Öffnung Steuerrohr | | |
| 18. | oberer Stützflansch | | |
| 19. | unterer Stützflansch | | |
| 20. | Drehachse | | |
| 21. | Aufnahme (oben) | | |
| 22. | Aufnahme (unten) | | |
| 23. | hintere Position | | |
| 24. | Tretlagergehäuse | | |
| 25. | Radnabenaufnahme | | |
| 26. | Rahmenlängsrichtung | | |

## Patentansprüche

1. Rahmen mit einem Steuerrohr (7) und einem ein oberes Steuersatzlager (11) und ein unteres Steuersatzlager (12) umfassenden Steuersatz zur drehbaren Lagerung eines Gabelschaftes (8) einer Gabel (9), wobei
- an der in einer Gebrauchsstellung des Rahmens (1) oberen Stirnseite des Steuerrohrs (7) lösbar ein in das Steuerrohr formschlüssig eingreifender oberer Einsatz (13) angeordnet ist,
- an der in einer Gebrauchsstellung des Rahmens (1) unteren Stirnseite des Steuerrohrs (7) lösbar ein in das Steuerrohr formschlüssig eingreifender unterer Einsatz (14) angeordnet ist,
- der obere Einsatz (13) eine obere Aufnahme (21) für das obere Steuersatzlager(11) des Steuersatzes (10) aufweist,
- der untere Einsatz (14) eine untere Aufnahme (22) für das untere Steuersatzlager (12) aufweist,
- der obere und der untere Einsatz (13, 14) achsensymmetrisch zu einer Symmetrieachse sind, so dass durch Herausnehmen des unteren Einsatzes (14) und des oberen Einsatzes (13) aus dem Steuerrohr und anschließendes Drehen des unteren und oberen Einsatzes (13, 14) um 180 Grad um deren Symmetrieachse die obere und untere Aufnahme (21, 22) für die Steuersatzlager (11, 12) in Längsrichtung des Rahmens verlagert werden,
- der obere und der untere Einsatz (13,14) als Scheibe ausgestaltet sind,
- die obere Aufnahme (21) für das obere Steuersatzlager (11) und die untere Aufnahme (22) für das untere Steuersatzlager (12) exzentrisch zur Symmetrieachse des oberen und unteren Einsatzes (13, 14) angeordnet sind und
- die Exzentrizität der unteren und oberen Aufnahme (21, 22) zu der Symmetrieachse des unteren und oberen Einsatzes (13, 14) übereinstimmt, wobei die Übereinstimmung sowohl hinsichtlich des Betrags als auch der Richtung der Exzentrizität zur Symmetrieachse besteht, **dadurch gekennzeichnet, dass**
- der Rahmen ein Fahrradrahmen ist und
- die Kontur des oberen und unteren Einsatzes (13, 14) die Form eines Ovals aufweist, die den um 180 Grad drehbaren oberen und unteren Einsatz (13,14) über Formschluss drehfest in dem Steuerrohr fixiert.

2. Fahrradrahmen nach Anspruch 1, **dadurch gekennzeichnet, dass** die Kontur der Einsätze die Form einer Ellipse aufweist.

3. Fahrradrahmen nach Anspruch 1, **dadurch gekennzeichnet, dass** die Kontur der Einsätze die Form einer Superellipse aufweist.

4. Fahrradrahmen nach einem der Ansprüche 1 bis 3, **dadurch gekennzeichnet, dass** der Innenquerschnitt (15) des Steuerrohres (7) mit dem Querschnitt der Einsätze (13,14) übereinstimmt.

5. Fahrradrahmen nach einem der Ansprüche 1 bis 4, **dadurch gekennzeichnet, dass** die obere Aufnahme (21) als Konussitz für das obere Steuersatzlager (11) und die untere Aufnahme (22) als Konussitz für das untere Steuersatzlager (12) ausgebildet sind.

6. Fahrradrahmen nach einem der Ansprüche 1 bis 5, **dadurch gekennzeichnet, dass** die obere Aufnahme (21) als zylindrischer Klemmsitz für das obere Steuersatzlager (11) und die untere Aufnahme (22) als zylindrischer Klemmsitz für das untere Steuersatzlager (12) ausgebildet sind.

7. Fahrradrahmen nach einem der Ansprüche 1 bis 6, **dadurch gekennzeichnet, dass** die obere Aufnahme (21) und das obere Steuersatzlager (11) und die untere Aufnahme (22) und das untere Steuersatzlager (12) eine Presspassung oder Übergangspassung bilden.

8. Fahrradrahmen nach einem der Ansprüche 1 bis 7, **dadurch gekennzeichnet, dass** im Steuerrohr (7) im Abstand von dessen stirnseitiger oberer Öffnung (16) ein oberer Stützflansch (18) für den in das Steuerrohr (7) eingreifenden oberen Einsatz (13) angeordnet ist und dass im Steuerrohr (7) im Abstand von dessen stirnseitiger unterer Öffnung (17) ein unterer Stützflansch (19) für den in das Steuerrohr (7) eingreifenden unteren Einsatz (14) angeordnet ist.

9. Fahrradrahmen nach Anspruch 8, **dadurch gekennzeichnet, dass** der Abstand zwischen stirnseitiger Öffnung (16,17) und Stützflansch (18,19) zumindest der Dicke der oberen bzw. unteren Scheibe (13,14) entspricht.

10. Fahrradrahmen nach einem der Ansprüche 1 bis 7, **dadurch gekennzeichnet, dass** der obere und/oder untere Einsatz an seiner in Einbaulage in Richtung der stirnseitigen Öffnung des Steuerrohrs weisenden Seite einen den Rand des Einsatzes zumindest teilweise umgebenden Vorsprung aufweist.

11. Fahrradrahmen nach einem der Ansprüche 1 bis 10, **gekennzeichnet durch** mindestens zwei Paare von Einsätzen (13,14), wobei die Aufnahmen (21,22) für die Steuersatzlager (11,12) in jedem Paar an einer anderen Position angeordnet sind.

12. Fahrradrahmen nach einem der Ansprüche 1 bis 7, **dadurch gekennzeichnet, dass** der an der oberen Stirnseite des Steuerrohrs (7) angeordnete Einsatz (27) und der an der unteren Stirnseite des Steuerrohrs (7) angeordnete Einsatz (28) durch einen Hohlzylinder (29) miteinander verbunden sind, durch dessen Höhlung der Gabelschaft (8) hindurchführbar ist.

13. Fahrradrahmen nach Anspruch 12, **dadurch gekennzeichnet, dass** die beiden Einsätze (27,28) und der Hohlzylinder (29) einstückig ausgebildet sind.

14. Fahrradrahmen nach Anspruch 12 oder 13, **dadurch gekennzeichnet, dass** sich die Aufnahme (31) für das obere Steuersatzlager (11) und die Aufnahme (32) für das untere Steuersatzlager (12) jeweils bis zu dem Hohlzylinder (29) erstrecken.

## Claims

1. Frame comprising a control tube (7) and a control set comprising an upper control set bearing (11) and a lower control set bearing (12) for rotatable mounting of a fork shaft (8) of a fork (9), wherein
- an upper insert (13) which engages positively in the control tube is disposed detachably on the upper front side of the control tube (7) in a usage position of the frame (1),
- a lower insert (14) which engages positively in the control tube is disposed detachably on the lower front side of the control tube (7) in a usage position of the frame (1),
- the upper insert (13) has an upper receptacle (21) for the upper control set bearing (11) of the control set (10),
- the lower insert (14) has a lower receptacle (22) for the lower control set bearing (12),
- the upper and the lower inserts (13, 14) are axisymmetrical to an axis of symmetry so that by removing the lower insert (14) and the upper insert (13) from the control tube and then turning the lower and upper insert (13, 14) by 180 degrees about its axis of symmetry, the upper and lower receptacle (21, 22) for the control set bearing (11, 12) are displaced in the longitudinal direction of the frame,
- the upper and the lower insert (13, 14) are configured as disks,
- the upper receptacle (21) for the upper control set bearing (11) and the lower receptacle (22) for the lower control set bearing (12) are disposed eccentrically to the axis of symmetry of the upper and lower insert (13, 14) and
- the eccentricity of the lower and upper receptacle (21, 22) to the axis of symmetry of the lower and upper insert (13, 14) agrees, where the agreement exists both with regard to the amount and also the direction of the eccentricity to the axis of symmetry, **characterised in that**
- the frame is a bicycle frame and
- the contour of the upper and lower insert (13, 14) has the shape of an oval which fixes the upper and lower insert (13, 14) which is rotatable through 18C degrees by means of a form fit in a torque-proof manner in the control tube.

2. The bicycle frame according to claim 1, **characterised in that** the contour of the inserts has the shape of an ellipse.

3. The bicycle frame according to claim 1, **characterised in that** the contour of the inserts has the shape of a superellipse.

4. The bicycle frame according to any one of claims 1 to 3, **characterised in that** the inner cross-section (15) of the control tube (7) agrees with the cross-section of the inserts (13, 14).

5. The bicycle frame according to any one of claims 1 to 4, **characterised in that** the upper receptacle (21) is configured as a conical seat for the upper control set bearing (11) and the lower receptacle (22) is configured as a conical seat for the lower control set bearing (12).

6. The bicycle frame according to any one of claims 1 to 5, **characterised in that** the upper receptacle (21) is configured as a cylindrical clamping seat for the upper control set bearing (11) and the lower receptacle (22) is configured as a cylindrical clamping seat for the lower control set bearing (12).

7. The bicycle frame according to any one of claims 1 to 6, **characterised in that** the upper receptacle (21) and the upper control set bearing (11) and the lower receptacle (22) and the lower control set bearing (12) form a press fit or transition fit.

8. The bicycle frame according to any one of claims 1 to 7, **characterised in that** an upper support flange (18) for the upper insert (13) engaging in the control tube (7) is disposed in the control tube (7) at a distance from its front-side upper opening (16) and that a lower support flange (19) for the lower insert (14) engaging in the control tube (7) is disposed in the control tube (7) at a distance from its front-side lower opening (17).

9. The bicycle frame according to claim 8, **characterised in that** the distance between front-side opening (16, 17) and support flange (18, 19) at least corresponds to the thickness of the upper or lower disk (13, 14).

10. The bicycle frame according to any one of claims 1 to 7, **characterised in that** the upper and/or lower insert has a projection at least partially surrounding the edge of the insert at its side pointing in the direction of the front-side opening of the control tube in its installed position.

11. The bicycle frame according to any one of claims 1 to 10, **characterised by** at least two pairs of inserts (13, 14) wherein the receptacles (21, 22) for the control set bearings (11, 12) are disposed in each pair at a different position.

12. The bicycle frame according to any one of claims 1 to 7, **characterised in that** the insert (27) disposed on the upper front side of the control tube (7) and the insert (28) disposed on the lower front side of the control tube (7) are connected to one another by a hollow cylinder (29), through the cavity whereof the fork shaft (B) can be guided.

13. The bicycle frame according to claim 12, **characterised in that** the two inserts (27, 28) and the hollow cylinder (29) are formed in one piece.

14. The bicycle frame according to claim 12 or 13, **characterised in that** the receptacle (31) for the upper control set bearing (11) and the receptacle (32) for the lower control set bearing (12) each extend as far as the hollow cylinder (29).

## Revendications

1. Cadre avec un tube de guidage (7) et un ensemble de guidage comprenant un palier supérieur (11) d'ensemble de guidage et un palier inférieur (12) d'ensemble de guidage pour le logement rotatif d'une tige de fourche (8) d'une fourche (9),
- sur la face frontale du tube de guidage (7), supérieure dans une position d'utilisation du cadre (1) un insert (13) supérieur s'engageant par complémentarité de forme étant disposé de manière amovible,
- sur la face frontale du tube de guidage (7), inférieure dans une position d'utilisation du cadre (1), un insert (14) inférieur s'engageant par complémentarité de forme étant disposé de manière amovible,
- l'insert supérieur (13) comportant un logement (21) supérieur pour le palier supérieur (11) d'ensemble de guidage de l'ensemble de guidage (10),
- l'insert inférieur (14) comportant un logement (22) inférieur pour le palier inférieur (12) d'ensemble de guidage,
- l'insert supérieur et inférieur (13, 14) étant symétriques à un axe de symétrie, de sorte que par extraction de l'insert inférieur (14) et de l'insert supérieur (13) du tube de guidage et par rotation consécutive de l'insert inférieur et supérieur (13, 14) de 180 degrés autour de leur axe de symétrie, le logement supérieur et inférieur (21, 22) pour les paliers (11, 12) d'ensemble de guidage sont déplacés en direction longitudinale du cadre,
- l'insert supérieur et inférieur (13, 14) étant conçus en tant que disques,
- le logement supérieur (21) pour le palier supérieur (11) d'ensemble de guidage et le logement inférieur (22) pour le palier inférieur (12) d'ensemble de guidage étant disposés de manière excentrique par rapport à l'axe de symétrie de l'insert supérieur et inférieur (13, 14) et
- l'excentricité du logement inférieur et supérieur (21, 22) concordant avec l'axe de symétrie de l'insert inférieur et supérieur (13, 14), la concordance étant donnée aussi bien au niveau du montant qu'au niveau de la direction de l'excentricité par rapport à l'axe de symétrie, **caractérisé en ce que**
- le cadre est un cadre de bicyclette et
- le contour de l'insert supérieur et inférieur (13, 14) présente la forme d'une ovale qui par complémentarité de forme fixe de manière solidaire en rotation l'insert supérieur et inférieur (13, 14) rotatifs de 180 degrés dans le tube de guidage.

2. Cadre de bicyclette selon la revendication 1, **caractérisé en ce que** le contour des inserts présente la forme d'une ellipse.

3. Cadre de bicyclette selon la revendication 1, **caractérisé en ce que** le contour des inserts présente la forme d'une super-ellipse.

4. Cadre de bicyclette selon l'une quelconque des revendications 1 à 3, **caractérisé en ce que** la section transversale intérieure (15) du tube de guidage (7) concorde avec la section transversale des inserts (13, 14).

5. Cadre de bicyclette selon l'une quelconque des revendications 1 à 4, **caractérisé en ce que** le logement supérieur (21) est conçu en tant que siège conique pour le palier supérieur (11) d'ensemble de guidage et le logement inférieur (22) est conçu en tant que siège conique pour le palier inférieur (12) d'ensemble de guidage.

6. Cadre de bicyclette selon l'une quelconque des revendications 1 à 5, **caractérisé en ce que** le logement supérieur (21) est conçu en tant que siège de serrage cylindrique pour le palier supérieur (11) d'ensemble de guidage et le logement inférieur (22) est conçu en tant que siège de serrage cylindrique pour le palier inférieur (12) d'ensemble de guidage.

7. Cadre de bicyclette selon l'une quelconque des revendications 1 à 6, **caractérisé en ce que** le logement supérieur (21) et le palier supérieur (11) d'ensemble de guidage et le logement inférieur (22) et le palier inférieur (12) d'ensemble de guidage forment un ajustement forcé ou un ajustement de transition.

8. Cadre de bicyclette selon l'une quelconque des revendications 1 à 7, **caractérisé en ce que** dans le tube de guidage (7), avec un écart par rapport à son orifice (16) frontal supérieur est disposée une bride d'appui (18) supérieure pour l'insert supérieur (13) s'engageant dans le tube de guidage (7) et **en ce que** dans le tube de guidage (7), avec un écart par rapport à son orifice (17) frontal inférieur est disposée une bride d'appui (19) inférieure pour l'insert inférieur (14) s'engageant dans le tube de guidage (7).

9. Cadre de bicyclette selon la revendication 8, **caractérisé en ce que** l'écart entre l'orifice frontal (16, 17) et la bride d'appui (18, 19) correspond au moins à l'épaisseur du disque supérieur ou inférieur (13, 14).

10. Cadre de bicyclette selon l'une quelconque des revendications 1 à 7, **caractérisé en ce que** sur son côté dirigé vers l'orifice côté frontal du tube de guidage dans sa position de montage, l'insert supérieur et/ou inférieur comporte une saillie entourant au moins en partie le bord de l'insert.

11. Cadre de bicyclette selon l'une quelconque des revendications 1 à 10, **caractérisé par** au moins deux paires d'inserts (13, 14), les logements (21, 22) pour les paliers (11, 12) d'ensemble de guidage étant disposés dans une autre position dans chaque paire.

12. Cadre de bicyclette selon l'une quelconque des revendications 1 à 7, **caractérisé en ce que** l'insert (27) disposé sur la face frontale supérieure du tube de guidage (7) et l'insert (28) disposé sur la face frontale inférieure du tube de guidage (7) sont reliés l'un à l'autre par un cylindre creux (29) à travers le creux duquel la tige de fourche (8) peut être enfilée.

13. Cadre de bicyclette selon la revendication 12, **caractérisé en ce que** les deux inserts (27, 28) et lé cylindre creux (29) sont conçus en monobloc.

14. Cadre de bicyclette selon la revendication 12 ou la revendication 13, **caractérisé en ce que** le logement (31) pour le palier supérieur (11) d'ensemble de guidage et le logement (32) pour le palier inférieur (12) d'ensemble de guidage s'étendent chacun jusqu'au cylindre creux (29).
